# EUROPÄISCHE PATENTSCHRIFT

(11) **EP 0 813 632 B1**
(45) Veröffentlichungstag und Bekanntmachung des Hinweises auf die Patenterteilung: **11.11.1998**
(21) Anmeldenummer: 96911907.2
(22) Anmeldetag: 23.04.1996
(51) Int. Cl.: D21G 1/02, F16C 13/00

(54) **BEHEIZBARE WALZE**
HEATABLE ROLLER
ROULEAU CHAUFFANT

(30) Priorität: 09.05.1995 DE 19516882; 29.06.1995 DE 29510512 U
(43) Veröffentlichungstag der Anmeldung: 29.12.1997
(73) Patentinhaber: Eduard Küsters Maschinenfabrik GmbH & Co. KG, 47805 Krefeld (DE)
(72) Erfinder: BORKENHAGEN, Werner, D-47804 Krefeld (DE); HADER, Peter, D-47906 Kempen (DE); KUBIK, Klaus, D-47804 Krefeld (DE)
(74) Vertreter: Palgen, Peter, Dipl.-Phys. Dr.
(86) Internationale Anmeldenummer: DE9600701
(87) Internationale Veröffentlichungsnummer: WO9635839

(56) Entgegenhaltungen:
- EP-A- 0 200 658
- FR-A- 1 462 089
- FR-A- 2 226 633
- GB-A- 913 455
- PATENT ABSTRACTS OF JAPAN vol. 11, no. 172 (M-955), 3.Juni 1987 & JP,A,62 004918 (TOKUDEN KK), 10.Januar 1987,
- PATENT ABSTRACTS OF JAPAN vol. 005, no. 025 (M-055), 14.Februar 1981 & JP,A,55 152913 (TOKUDEN KK), 28.November 1980,
- PATENT ABSTRACTS OF JAPAN vol. 013, no. 418 (M-871), 18.September 1989 & JP,A,01 156268 (TOKUDEN KK), 19.Juni 1989,

## Beschreibung

Die Erfindung bezieht sich auf eine beheizbare Walze der dem Oberbegriff des Anspruchs 1 entsprechenden Art.

Eine solche Walze ist aus einer Firmenschrift der japanischen Firma Tokuden bekannt. Hierbei ist im Innern der Walze koaxial zu deren Achse eine Spulenanordnung vorgesehen, die den Walzenkörper induktiv von innen aufheizt. Radial außerhalb der Spulenanordnung sind in dem Walzenkörper zur Achse parallele Bohrungen, die teilweise mit Wasser gefüllt sind. weil dieses die größte Verdampfungswärme und damit bei der Kondensation die größte Temperaturangleichungswirkung hat. An den Enden sind die Bohrungen jeweils einzeln druckfest verschlossen. Tritt in Betrieb an einer Stelle einer Bohrung eine Temperaturerniedrigung ein, kondensiert dort der in den vom Wasser nicht gefüllten freien Raum der Hohlkammer befindliche Dampf und bewirkt eine Kondensationsaufheizung, die die betreffende Stelle sogleich wieder auf die in der Umgebung vorliegende Temperatur bringt. Es ist also ein selbsttätiger Temperaturausgleich über die Oberfläche des Walzenkörper gegeben.

Die länglichen Kanäle sind mit bekannten Mitteln im Walzenkörper mit relativ geringem Aufwand herstellbar und belassen den Walzenkörper in seiner Stabilität im wesentlichen unversehrt. Der Ausdruck "länglicher Kanal" soll besagen, daß es auf den Querschnitt nicht ankommt und daß es sich um Kanäle von einer einem Vielfachen, z.B. 20- bis 150-fachen, der Querschnittsabmessung betragenden Länge handelt. In der Praxis handelt es sich um nahe dem äußeren Umfang des Walzenkörpers in diesen eingebrachte sogenannte periphere Bohrungen.

Achsparallele Bohrungen sind im Zusammenhang mit der Beheizung von Walzen seit langem bekannt, z.B. aus dem DE-GM 90 14 117 und JP-A-62004918, wo sie allerdings kein geschlossenes System bilden, sondern von einer Wärmeträgerflüssigkeit durchströmt werden, die außerhalb der Walze aufgeheizt und umgepumpt wird. Bei der DE 40 33 986 A1 sind in den peripheren Bohrungen stabförmige elektrische Heizelemente angeordnet.

Die länglichen Kanäle müssen bei der gattungsgemäßen Ausführungsform einzeln bis zu einem gewissen Grad mit Wasser gefüllt und dann druckdicht verschlossen werden. Außerdem müssen die Kanäle nach dem Befüllen mit Wasser evakuiert werden, da sich sonst in den Kanälen Luftpfropfen bilden, die das Kondensieren des Dampfes behindern. Wegen der Notwendigkeit der Evakuierung kommt nur ein Einzelverschluß der Kanäle durch Zuschweißen oder Schraubstopfen in Betracht. Dies bedeutet einen erheblichen Aufwand, der während der Lebensdauer der Walze unter Umständen mehrfach zu leisten ist, denn wenn die Walze zum Beispiel neu graviert werden muß, muß sie an der Oberfläche wärmebehandelt werden, was ein Entleeren der achsparallelen Kanäle und danach eine erneute Befüllung mit genau abgemessenen Wassermengen und anschließender Evakuierung erforderlich macht. Wenn die Wassermengen in den einzelnen achsparallelen Kanälen nicht übereinstimmen, ist die Wirksamkeit der Kondensationsbeheizung bei den einzelnen Kanälen über den Umfang des Walzenkörpers gesehen nicht gleichmäßig, so daß hierauf einige Mühe zu verwenden ist.

Der Erfindung liegt die Aufgabe zugrunde, eine gattungsgemäße Walze so auszugestalten, daß ihre Eigenschaften im Betrieb verbessert und der Aufwand bei der Inbetriebnahme oder Außerbetriebnahme verringert ist.

Diese Aufgabe wird durch die in Anspruch 1 wiedergegebene Erfindung gelöst.

Die über den Umfang verteilten werden durch die Ringkammer miteinander verbunden. Im Betrieb findet dadurch ein selbsttätiger Ausgleich der in den einzelnen Kanälen befindlichen Wassermengen und damit eine Vergleichmäßigung der Temperaturverteilung über den Umfang statt. Die Ringkammer bietet aber gleichzeitig die Möglichkeit, mit nur einem Zugangskanal sämtliche achsparallelen Kanäle zugleich befüllen und entleeren sowie in der Gesamtheit der Kanäle ein Vakuum erzeugen zu können. Es bedarf also nicht mehr der Einzelbefüllung der Kanäle unter Beachtung gleicher Wassermengen, sondern es muß nur noch eine einzige Wassermenge an einer Stelle zugeführt oder abgelassen werden. Auch ist es ein wesentlicher Vorteil, daß nur an dieser einen Stelle, nämlich an dem Zugangskanal der Verschluß der Gesamtheit der achsparallelen Kanäle zu einem geschlossenen System erfolgt.

Ringkammern, in die achsparallele Kanäle münden, sind für sich genommen aus der DE 33 26 746 A1 und der DE 38 38 726 A1 bekannt. Die bekannten Ausführungsformen haben jedoch kein geschlossenes Kanalsystem, sondern es werden die achsparallelen Kanäle von einer Wärmeträgerflüssigkeit durchströmt.

Die Kanäle sind zweckmäßig gemäß Anspruch 2 ausgebildet.

Eine in der Praxis wichtige Ausgestaltung der Erfindung befaßt sich mit einer fertigungsmäßig vertretbaren Herstellung der Ringnut.

Diese kann vorteilhaft in der in Anspruch 3 wiedergegebenen Weise erfolgen.

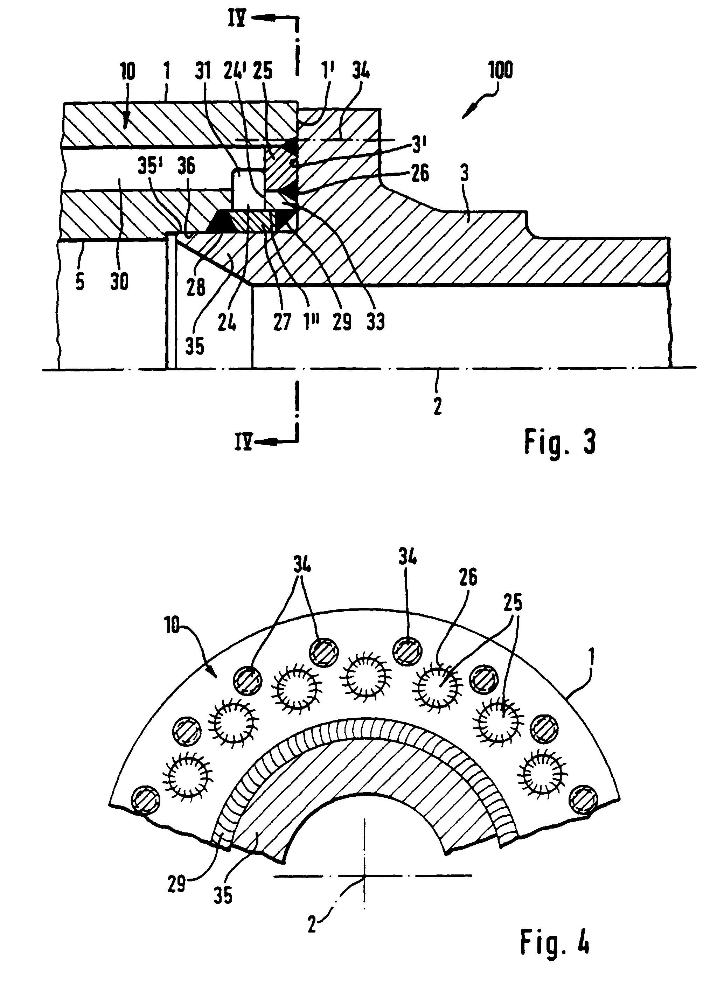

Für die Erzeugung der Ringnut durch eine ringförmige Ausnehmung, die durch einen Schließring geschlossen wird, kommt als erste Möglichkeit diejenige nach Fig. 4 in Betracht.

Alternativ kann die Ringnut auch in der in Anspruch 5 wiedergegebenen Weise erzeugt werden.

Da die Schließringe und die Stopfen dicht sein und gegebenenfalls hohen Drücken standhalten können müssen, empfiehlt es sich, sie längs ihrer Fügezone, d.h. längs der beiden Längsränder der Schließringe und am Umfang der Stopfen zu verschweißen (Anspruch 6).

Bei der dem bevorzugten Ausführungsbeispiel der Erfindung hat der zylindrische Walzenkörper angesetzte Walzenzapfen. Diese können gemäß Anspruch 7 so ausgestaltet sein, daß sie die Fügezonen abdecken, so daß auch im Falle des Berstens einer Schweißnaht die Schadensstelle unter Verschluß gehalten und das explosionsartige Wegfliegen von Teilen unter dem hohen Dampfdruck vermieden ist.

Die Ausführung des Walzenzapfens kann insbesondere in der in Anspruch 8 wiedergegebenen Weise getroffen sein.

Der Zugangs kanal kann gemäß Anspruch 9 durch einen Walzenzapfen der Walze verlaufen und gemäß Anspruch 10 in der Stirnseite des Walzenzapfens münden, wo er durch eine Endscheibe druckfest verschließbar ist.

Gemäß Anspruch 11 kann die Endscheibe einen verschließbaren Anschluß aufweisen, der über einen in der Endscheibe ausgebildeten Anschlußkanal mit dem Zugangs kanal in dem Walzenzapfen in Verbindung steht.

Ein weiterer Vorteil der Ringkammeranordnung besteht darin, daß sämtliche achsparallelen Kanäle gleichzeitig durch eine einzelne Überdrucksicherung abgesichert werden können (Anspruch 12), die insbesondere in der in Anspruch 13 wiedergegebenen Weise ausgebildet und angebracht sein kann.

Um nach dem Evakuieren der teilweise mit Wasser gefüllten Kanäle das Vakuum halten zu können, ist die Anordnung eines Vakuumrückschlagventils nach Anspruch 14 zweckmäßig.

Auf diese Weise kann an dem Anschluß evakuiert werden und wird das Vakuum gehalten, wenn die Vakuumpumpe von dem Anschluß abgenommen wird. Das Vakuum wird gehalten, während das Überdruckventil in den Anschluß eingesetzt, im allgemeinen eingeschraubt wird. Wenn der Druck in den achsparallelen Kanälen durch eine Temperatursteigerung ansteigt, gibt das Vakuumrückschlagventil den Weg frei und wird der Druck durch das Überdruckventil abgefangen.

Die erste Hohlraumanordnung, die die Heizeinrichtung aufnimmt, kann prinzipiell ebenfalls eine Anordnung von achsparallelen Bohrungen des Walzenkörpers sein, die radial innerhalb der zweiten Hohlraumanordnung vorgesehen ist.

Bei der bevorzugten Ausführungsform der Erfindung gemäß Anspruch 15 umfaßt die erste Hohlraumanordnung jedoch einen einzelnen zur Achse koaxialen Hohlraum.

Die Heizeinrichtung kann in einer ersten Alternative ein den Walzenkörper der Länge nach durchströmendes Wärmeträgermedium umfassen (Anspruch 16), welches in dem schon erwähnten einzelnen jüngeren achsparallelen Bohrungen oder in dem einzelnen gültigen Hohlraum geführt ist, sei es in einem besonderen Heizkörper, sei es daß es den mittigen Hohlraum ganz ausfüllt.

Gemäß Anspruch 17 kann die Heizeinrichtung aber auch eine elektrische Heizvorrichtung umfassen, beispielsweise in Gestalt elektrischer Widerstandsheizstäbe (Anspruch 18) oder einer Induktionsheizvorrichtung (Anspruch 19).

Wenn die Heizvorrichtungen in dem einzelnen zur Achse koaxialen mittigen Hohlraum angeordnet sind, können sie mit dem Walzenkörper umlaufen und über mindestens einen Drehanschluß mit Energie versorgbar sein (Anspruch 20), wie es für sich genommen für widerstandsbeheizte Strahlungsheizkörper aus dem Aufsatz von Wagner "Die elektrische Walzenheizung" in "die elektrische Ausrüstung" (Vogel-Verlag Würzburg) Nr. 2 vom 20. April 1966 beschrieben ist.

Gemäß Anspruch 21 ist es aber auch möglich, daß die Heizeinrichtung undrehbar angeordnet ist, was den Drehanschluß erspart, und in dem koaxialen mittigen Hohlraum drehgelagert ist.

In der Zeichnung sind Ausführungsbeispiele der Erfindung schematisch dargestellt.
Fig. 1 zeigt einen durch die Achse gehenden Längsschnitt durch eine beheizte Walze;
Fig. 2 ist eine Teilquerschnitt nach der Linie II-II in Fig. 1;
Fig. 3 zeigt einen Teillängsschnitt durch einen Endbereich einer Walze;
Fig. 4 zeigt eine Ansicht nach der Linie IV-IV in Fig. 3;
Fig. 5 und 6 zeigen entsprechende Ansichten einer abgewandelten Ausführungsform.

Die als Ganzes mit 100 bezeichnete Walze umfaßt einen zylindrischen Walzenkörper 10 aus Stahl mit einem arbeitenden Walzenumfang 1 und einer Achse 2, der an den beiden Enden auf einen geringeren Durchmesser abgesetzte nach außen vorstehende Walzenzapfen 3 besitzt, auf denen Lager 4 zur Lagerung der Walze 100 in einem Maschinengestell oder dergleichen angeordnet sind. Der Walzenkörper 10 enthält als erste Hohlraumanordnung H₁ einen einzelnen zur Achse 2 koaxialen zylindrischen inneren Hohlraum 5, in welchem eine als Ganzes mit 20 bezeichnete elektrische Heizvorrichtung angeordnet ist, die in dem gezeigten Ausführungsbeispiel gegenüber dem Walzenkörper 10 undrehbar ist und mit diesem umläuft. Die Heizvorrichtung 20 umfaßt mehrere, z.B. sechs oder acht, auf einem Teilkreis über den Umfang gleichmäßig verteilte achsparallele elektrische Widerstandsheizstäbe 21, die mittels in in axialen Abständen angeordneter Haltescheiben 22 in ihrer gegenseitigen Anordnung abgestützt sind und an dem in der Zeichnung linken Ende eine Endscheibe 6 der Walze 100 durchsetzen, an deren Außenseite eine Schleifringanordnung 14 vorgesehen ist, durch die der Strom zur Beheizung der Heizelemente 21 einleitbar ist. Wenn die Heizvorrichtung, was einer nicht dargestellten möglichen Ausführungsform entspricht, im Innern des Walzenkörpers undrehbar angeordnet ist und sich der Walzenkörper 10 um die Heizvorrichtung dreht, bedarf es der Schleifringanordnung 14 nicht und können feste Anschlüsse für die Heizenergie vorgesehen sein. Die Heizvorrichtung 20 bildet eine in sich geschlossene Baueinheit, die nach dem Lösen der Endscheibe 6 nach links aus der Walze 100 herausgezogen werden kann, z.B. falls einzelne Heizstäbe 21 defekt sind und ausgewechselt werden müssen.

Die Heizvorrichtung 20 heizt durch Strahlung die Umfangsfläche des Hohlraums 5 auf. Die Wärme wird durch Leitung radial nach außen transportiert und am Außenumfang 1 der Walze 100 auf die zu bearbeitende Warenbahn übertragen. Angestrebt ist eine möglichst gleichmäßige Temperaturverteilung am Außenumfang 1, in erster Linie in Längsrichtung der Walze 100, aber auch in Umfangsrichtung.

Die Gleichmäßigkeit der Temperaturverteilung kann gestört werden, wenn entweder die Heizstäbe 21 ungleichmäßig arbeiten oder die Warenbahn ungleichmäßige Wärmemengen abnimmt, beispielsweise durch ungleichmäßige Feuchtegehalte.

Um der Ungleichmäßigkeit der Temperaturverteilung entgegenzuwirken, ist in dem Walzenkörper 10 radial außerhalb des Hohlraums 5 eine zweite Hohlraumanordnung H₂ in Gestalt über den Umfang gleichmäßig verteilter, auf einem Teilkreis angeordneter, gleichen Durchmesser aufweisender achsparalleler Bohrungen 30 vorgesehen, die in dem Ausführungsbeispiel etwa um den Betrag ihres Durchmessers innerhalb des Außenumfangs 1 gelegen sind und auch in Umfangsrichtung einen entsprechenden lichten Abstand voneinander belassen.

In der Nähe der Enden des zylindrischen Walzenumfangs 1 sind die Bohrungen 30 durch Ringkammern 31 miteinander verbunden, die sich in einer zur Achse 2 senkrechten Ebene erstrecken und in dem Ausführungsbeispiel in einer durch die Achse 2 gehenden Schnittebene einen Rechteckquerschnitt aufweisen, wobei sich die den Bohrungen 30 benachbarte Flanke radial sowohl nach innen als auch nach außen etwas über die Begrenzungen der Bohrungen 30 hinaus erstreckt, so daß deren Querschnitt von den Ringkammern 31 überdeckt ist.

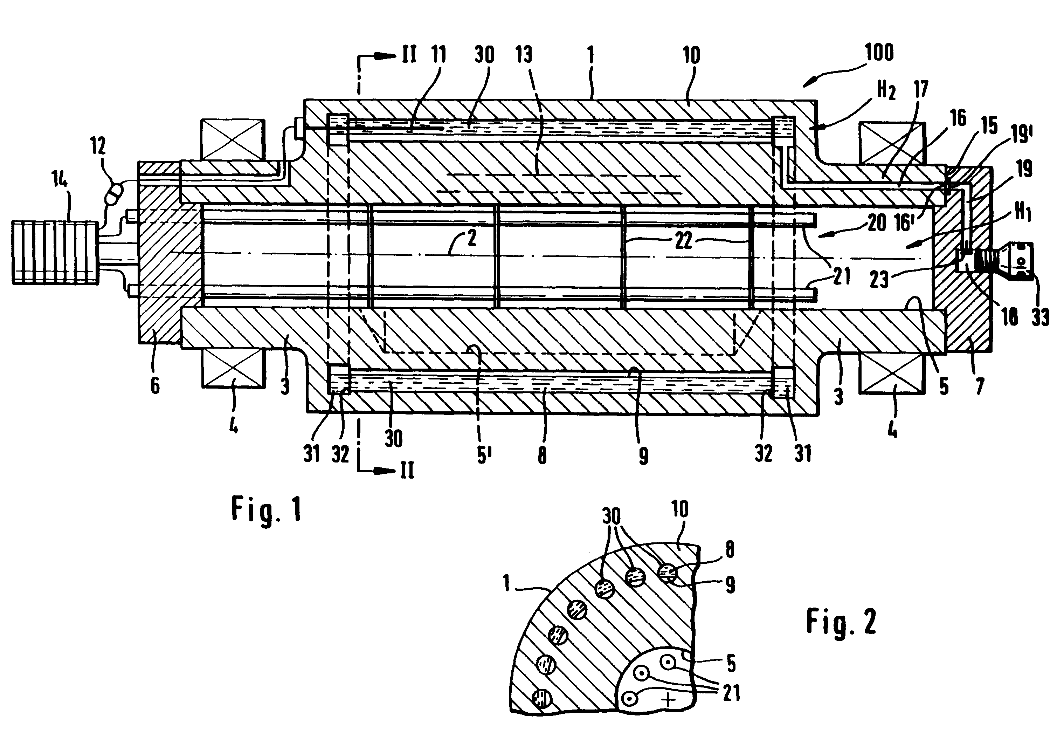

Die in Fig. 1 rechte Ringkammer 31 besitzt einen Zugangskanal 16, der sich durch den Achszapfen 3 hindurcherstreckt und an der Stirnseite 15 des Achszapfens 3 bei 16' ausmündet.

Die Stirnseite 15 ist von einer Deckscheibe 7 überdeckt, in der ein Anschlußkanal 19 ausgebildet ist, der an der der Stelle 16' gegenüberliegenden Stelle 19' ausmündet und auf diese Weise mit dem Zugangskanal 16 in Verbindung steht. Anderenends mündet der Anschlußkanal 19 in einen Anschluß 18, der in dem Ausführungsbeispiel als zu der Achse gleichachsige Gewindebohrung ausgebildet ist. In die Gewindebohrung ist in dem in Fig. 1 gezeigten Zustand eine Überdrucksicherung 33 mit einer Berstscheibe eingeschraubt, die das Gesamtsystem der Kanäle 30 und Ringkammern 31 nach außen hin abschließt.

Innenseitig der Überdrucksicherung 33 bzw. des Anschlusses 18 ist ein in Fig. 1 nur schematisch angedeutetes Vakuumrückschlagventil 23 vorgesehen, welches nach außen öffnet.

Der Anschluß 18 dient auch zum Befüllen und Entleeren des Systems mit dem Wasser 8 sowie zum Evakuieren des Systems, nachdem das Wasser eingefüllt ist. Der Vakuumanschluß wird nach dem Evakuieren aus dem Anschluß 18 herausgeschraubt, worauf das Vakuumrückschlagventil 23 das Vakuum aufrechterhält. Es kann sodann die Überdrucksicherung 33 eingeschraubt werden.

Die Bohrungen 30 und die Ringkammern 31 bilden ein geschlossenes teilweise mit Wasser gefülltes System, in welchem der Druck entsprechend der an den Stellen der Bohrungen 30 herrschenden Temperatur ansteigt. Im Betrieb, wenn also die Walze 100 mit erheblicher Geschwindigkeit umläuft, legt sich das Wasser 8 unter der Wirkung der Zentrifugalkraft gegen die äußere Begrenzung der Bohrungen 30 und bildet einen zylindrischen inneren Spiegel 9. Sobald an einer Stelle der inneren, von dem Wasser freien Begrenzung der Bohrung 30 einen niedrigere Temperatur auftritt, kondensiert dort der Wasserdampf und zieht die Temperatur an der betreffenden Stelle wieder hoch. Das Wasser 8 in den teilweise gefüllten Bohrungen 30 wirkt also als selbstätiger Temperaturausgleich.

Die Temperatur des Wassers 8 kann durch einen Thermofühler 11, der bei laufender Walze radial außerhalb des inneren Spiegels 9 des Wassers 8 und somit in dem Wasser gelegen ist, erfaßt werden, dessen Signal über eine Steckerverbindung 12 einem der Schleifringe der Schleifringanordnung 7 zugeleitet wird.

In der Zeichnung sind zwei Modifikationen gestrichelt angedeutet. In der oberen Hälfte sind als alternative erste Hohlraumanordnung H₁ radial mit Abstand innerhalb der Bohrungen 30 gelegene achsparallele, über den Umfang verteilte Bohrungen 13 möglich, durch die in an sich bekannter Weise gegebenenfalls in mäanderförmiger Flüssigkeitsführung ein Wärmeträgermedium hindurchleitbar ist. Diese Art der Beheizung kann die Heizvorrichtung 20 ersetzen. Die andere Modifikation beinhaltet eine im Arbeitsbereich des Walzenumfangs 1 vorhandene zur Achse 2 koaxiale zylindrische Erweiterung 5' des zentralen Hohlraums 5, der in diesem Bereich die Wandstärke des Walzenkörpers 10 verringert, so daß die auf den Innenumfang des Walzenkörpers 10 aufgebrachte Wärme nunmehr eine geringere radiale Strecke durch Leitung transportiert werden muß.

In den Fig. 3 bis 6 sind Möglichkeiten der praktischen Realisierung der Ringkammern 31 an den Enden der Längsbohrungen 30 wiedergegeben. Die Walzenzapfen 3 sind hierbei als separate Teile an den eigentlichen zylindrischen Walzenkörper 10 angesetzt.

Aus Fig. 3 ist ersichtlich, daß die die Kanäle in dem zylindrischen Walzenkörper 10 bildenden Längsbohrungen 30 von der zur Achse 2 senkrechten Stirnseite 1' des Walzenkörpers 10 her angebracht sind.

Von dem Innenumfang 1" des Endes des Walzenkörpers 10 her ist in das Ende eine in dem Ausführungsbeispiel im Querschnitt etwa U-förmige Innenumfangsnut 24 eingebracht, die die Längsbohrungen 30 anschneidet. Zwischen der äußeren, in Fig. 3 rechten Flanke 24' der Umfangsnut 24 und der Stirnseite 1' des Walzenkörpers 10 verbleibt eine Wandstärke von 10 bis 30 mm. Die Längsbohrungen 30 setzen sich von ihrer Herstellung her durch diese verbleibende Wandstärke fort und sind sämtlich durch eingeschweißte Stopfen 25 dicht verschlossen. Die Fügezone, d.h. die ringförmige Schweißnaht, trägt die Bezugszahl 26.

Die lichte Weite der Umfangsnut 24 ist radial nach innen durch einen Schließring 27 von etwa rechteckigem Querschnitt überdeckt, wobei sich die längeren Rechteckseiten parallel zur Achse 2 erstrecken. An den beiden kurzen Rechteckseiten ist der Schließring 27 durch Schweißnähte 28 und 29 mit dem Ende des Walzenkörpers 10 bzw. dem inneren Rand des Wandungsteils 33 verschweißt.

Der separate Walzenzapfen 3 ist mit einer zur Achse senkrechten Endfläche 3' gegen die Stirnseite 1' des Walzenkörpers 10 gesetzt und dort mittels über den Umfang verteilter in Fig. 3 nur angedeuteter achsparalleler Schrauben 34 befestigt. Der Walzenzapfen 3 besitzt einen axial vorspringenden Zentrierbund 35, der sich mit seiner Außenumfangsfläche von innen gegen einen Innenumfangsteil 36 des Walzenkörpers 10 und insbesondere gegen den Innenumfang des Schließrings 27 legt.

Der Walzenzapfen 3 deckt also die Fügezonen in Gestalt der Schweißnähe 26,28,29 gegen den in den Längsbohrungen 30 und in der durch den Schließring 27 zu der Ringnut 31 gewordenen Umfangsnut 24 nach außen ab, so daß bei einem Versagen einer der Schweißnähte keine Teile nach außen geschleudert werden können.

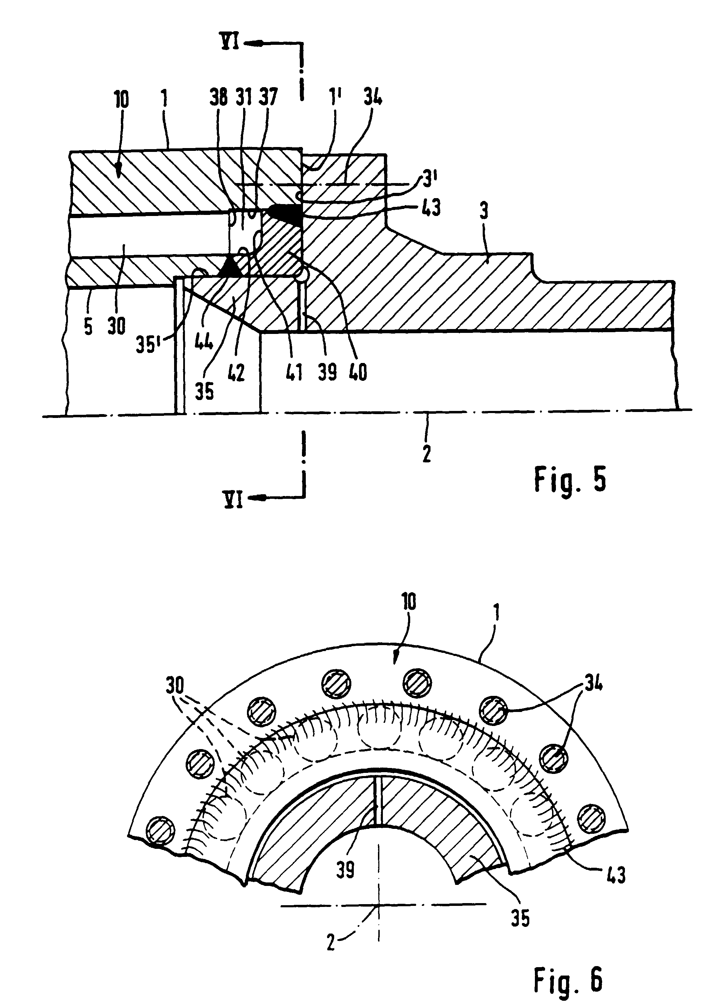

Bei der Ausführungsform nach den Fig. 5 und 6 ist in die Stirnseite 1' des Walzenkörpers 10 ein innerer Absatz mit einem zylindrischen äußeren Wandungsteil 37 und einem senkrecht zur Achse 2 nach innen vorspringenden absatzartigen Wandungsteil 38 eingedreht. Die Längsbohrungen 30 werden in den absatzartigen Wandungsteil 38 eingebracht, der sich also über den gesamten Querschnitt der Längsbohrungen 30 erstreckt. Nach Fertigstellung der Längsbohrungen wird ein in einem durch die Achse gehenden Querschnitt winkliger Schließring 40 eingeschweißt. Ein radialer Schenkel 41 des Schließrings bildet die dem Absatz 38 gegenüberliegende Flanke der Ringnut 31, während der andere Schenkel 42 die radial innere Begrenzung der Ringnut 31 darstellt. Der Schließring 40 ist an seinen beiden Rändern durch Schweißnähte 43,44 mit dem äußeren Rand der Zylinderfläche 37 bzw. dem inneren Rand der Absatzfläche 38 verschweißt.

Die durch die Schweißnähte 43,44 gebildete Fügezone wird in der gleichen Weise wie in dem Ausführungsbeispiel der Fig. 3 und 4 durch die zur Achse 2 senkrechte Endfläche 3' und den Außenumfang 35' des Zentrierbundes 35 abgedeckt. 39 ist eine Druckentlastungsbohrung, die vom Scheitel zwischen der Endfläche 3' und dem Außenumfang 35' des Zentrierbundes 35 in der aus der Zeichnung ersichtlichen Weise ausgeht.

## Patentansprüche

1. Beheizbare Walze (100) mit einem um seine Achse (2) umlaufenden zylindrischen Walzenkörper (10), dessen Außenumfang (1) den arbeitenden Walzenumfang bildet und der eine erste innere Hohlraumanordnung aufweist,
mit einer in der ersten Hohlraumanordnung (H₁) über die Länge der Walze (100) in deren Längsrichtung mindestens über die Arbeitsbreite der Walze (100) sich erstreckenden Heizanordnung,
und mit einer in dem Walzenkörper (10) radial außerhalb der ersten Hohlraumanordnung vorgesehenen geschlossenen zweiten Hohlraumanordnung (H₂) in Gestalt mehrerer über den Umfang des Walzenkörpers (10) gleichmäßig verteilter, länglicher an den Enden geschlossener achsparalleler Kanäle, die teilweise mit einer bei der durch die Heizvorrichtung erzeugten Temperatur verdampfenden Flüssigkeit gefüllt sind,
**dadurch gekennzeichnet,**
daß die länglichen Kanäle an mindestens einem Ende durch eine Ringkammer (31) miteinander verbunden sind, die einen verschließbaren separaten, von außen erreichbaren Zugangskanal (16) aufweist.

2. Walze nach Anspruch 1, **dadurch gekennzeichnet**, daß die Ringkammer (31) radial den Querschnitt der stabförmigen Ausnehmungen überdeckt.

3. Walze nach Anspruch 1 oder 2, **dadurch gekennzeichnet**, daß die Ringnut (31) durch eine am Ende des zylindrischen Walzenkörpers (10) angebrachte ringförmige Ausnehmung (24;37,38) vorgebildet ist, die mit den Enden der Kanäle in Flüssigkeitsverbindung steht.

4. Walze nach Anspruch 3, **dadurch gekennzeichnet**, daß die Ringnut (31) eine vom Innenumfang des Endes des Walzenkörpers (10) ausgehende, die Enden der Kanäle anschneidende Innenumfangsnut 24 umfaßt, die durch einen den lichten Querschnitt der Umfangsnut (24) radial nach innen abdeckenden Schließring (27) geschlossen ist und durch deren äußere Flanke (33) die Kanäle hindurchgehen und dort durch eingesetzte Stopfen (25) axial nach außen geschlossen sind.

5. Walze nach Anspruch 3, **dadurch gekennzeichnet**, daß die Ringnut (31) einen inneren Umfangsabsatz (37,38) am Ende des Walzenkörpers (10) umfaßt, der durch einen winkligen Schließring (40) axial nach außen und radial nach innen geschlossen ist.

6. Walze nach Anspruch 4 oder 5, **dadurch gekennzeichnet**, daß die Schließringe (27,40) und die Stopfen (25) längs ihrer Fügezonen verschweißt sind.

7. Walze nach einem der Ansprüche 3 bis 6, **dadurch gekennzeichnet**, daß an die Enden des zylindrischen Walzenkörpers (10) je ein Walzenzapfen (3) angesetzt ist, der die Fügezonen (26,28,29;43,44) abdeckt.

8. Walze nach Anspruch 7, **dadurch gekennzeichnet**, daß der Walzenzapfen (3) eine gegen die Stirnseite (1') des Walzenkörpers (10) zur Anlage kommende, zur Achse (2) senkrechte Endfläche (3') und einen in das Ende des zylindrischen Walzenkörpers (10) eingreifenden zylindrischen Zentrieransatz (35) umfaßt.

9. Walze nach einem der Ansprüche 1 bis 8, **dadurch gekennzeichnet**, daß der Walzenkörper (10) an den Enden achsgleiche Walzenzapfen (3) aufweist und sich der Zugangskanal (16) durch die Wandung (17) eines Walzenzapfens (3) hindurcherstreckt und im Bereich des Endes des Walzenzapfens (3) ausmündet.

10. Walze nach Anspruch 9, **dadurch gekennzeichnet**, daß der Zugangskanal (16) in der Stirnseite (15) des Achszapfens (15) ausmündet und die Stirnseite (15) an einer Endscheibe (7) überdeckt ist, mittels derer der Zugangskanal (16) drehfest verschließbar ist.

11. Walze nach Anspruch 10, **dadurch gekennzeichnet**, daß in der Endscheibe (7) ein verschließbarer Anschluß (18) ausgebildet ist, der über einen in der Endscheibe (7) ausgebildeten Anschlußkanal (19) mit dem Zugangskanal (17) in Verbindung steht.

12. Walze nach einem der Ansprüche 1 bis 11, **dadurch gekennzeichnet**, daß die Ringkammer (31) gegen das Auftreten von zu hohen Drücken gesichert ist.

13. Walze nach Anspruch 11 und 12, **dadurch gekennzeichnet**, daß in den Anschluß (18) eine diesen verschließende Überdrucksicherung (33) mit Berstscheibe eingesetzt ist.

14. Walze nach Anspruch 13, **dadurch gekennzeichnet**, daß in dem Anschlußkanal (19) innenseitig des Überdruckventils (33) ein Vakuumrückschlagventil (23) angeordnet ist.

15. Walze nach einem der Ansprüche 1 bis 14, **dadurch gekennzeichnet**, daß die erste Hohlraumanordnung (H₁) einen einzelnen zur Achse (2) koaxialen Hohlraum (5) umfaßt.

16. Walze nach einem der Ansprüche 1 bis 15, **dadurch gekennzeichnet**, daß die Heizeinrichtung ein den Walzenkörper (10) der Länge nach durchströmendes Wärmeträgermedium umfaßt.

17. Walze nach einem der Ansprüche 1 bis 16, **dadurch gekennzeichnet,** daß die Heizeinrichtung eine elektrische Heizvorrichtung umfaßt.

18. Walze nach Anspruch 17, **dadurch gekennzeichnet,**, daß die Heizeinrichtung elektrische Widerstandsheizstäbe (21) umfaßt.

19. Walze nach Anspruch 18, **dadurch gekennzeichnet**, daß die Heizeinrichtung eine Induktionseinrichtung ist.

20. Walze nach einem der Ansprüche 1 bis 19, **dadurch gekennzeichnet**, daß die Heizeinrichtung (20) mit dem Walzenkörper (10) umläuft und über mindestens einen Drehanschluß (14) mit Energie versorgbar ist.

21. Walze nach einem der Ansprüche 1 bis 19, **dadurch gekennzeichnet**, daß die Heizeinrichtung undrehbar angeordnet und in der Hohlwalze (5) drehgelagert ist.

## Claims

1. A heatable roller (100) comprising a cylindrical roller body (10) which rotates about its axis (2) and the outer periphery of which forms the working roller periphery and which has a first inner cavity arrangement,
with a heating arrangement extending in the first cavity arrangement (H₁) over the length of the roller (100) in the longitudinal direction thereof at least over the working width of the roller (100),
and with a closed second cavity arrangement (H₂) provided in the roller body (10) radially outside the first cavity arrangement and in the form of a plurality of elongate axis-parallel ducts which are closed at the ends and which are distributed uniformly over the periphery of the roller body (1) and which are partially filled with a fluid which evaporates at a temperature generated by the heating device,
characterised in that
the elongate ducts are interconnected at least at one end by an annular chamber (31) having a sealable separate access duct (16) accessible from outside.

2. A roller according to claim 1, characterised in that the annular chamber (31) radially covers the cross-section of the rod-shaped recesses.

3. A roller according to claim 1 or 2, characterised in that the annular groove (31) is embodied by an annular recess (24; 37, 38) provided at the end of the cylindrical roller body (10) and in fluid communication with the ends of the ducts.

4. A roller according to claim 3, characterised in that the annular groove (31) comprises an inner peripheral groove (24) which leads from the inner periphery of the end of the roller body (10) and intersects the ends of the ducts and is closed by a closure ring (27) which radially inwardly covers the inside cross-section of the peripheral groove (24), the ducts passing through the outer flank (33) of said peripheral groove (24), where they are sealed off from the exterior axially by inserted plugs (25).

5. A roller according to claim 3, characterised in that the annular groove (31) comprises an inner peripheral shoulder (37, 38) at the end of the roller body (10), which is closed off axially outwards and radially inwards by an angular closure ring (40).

6. A roller according to claim 4 or 5, characterised in that the closure rings (27, 40) and the plugs (25) are welded along their joint zones.

7. A roller according to any one of claims 3 to 6, characterised in that trunnions (3) are fitted one to each end of the cylindrical roller body (10) and cover the joint zones (26, 28, 29; 43, 44).

8. A roller according to claim 7, characterised in that the trunnion (3) comprises an end face (3') perpendicular to the axis (2) and bearing against the end face (1') of the roller body (10), and a cylindrical centring attachment (35) engaging in the end of the cylindrical roller body (10).

9. A roller according to any one of claims 1 to 8, characterised in that the roller body (10) has at the ends coaxial trunnions (3) and the access duct (16) extends through the wall (17) of a trunnion (3) and opens out in the region of the end of the trunnion (3).

10. A roller according to claim 9, characterised in that the access duct (16) opens out into the end face (15) of the trunnion (15) and the end face (15) is covered at an end disc (7) by means of which the access duct (16) can be sealed so as to be relatively non-rotatable.

11. A roller according to claim 10, characterised in that a sealable connection (18) is formed in the end disc (7) and communicates with the access duct (17) via a connecting duct (19) formed in the end disc (7).

12. A roller according to any one of claims 1 to 11, characterised in that the annular chamber (31) is protected from excess pressures.

13. A roller according to claims 11 and 12, characterised in that a pressure relief device (33) with a bursting disc is inserted into the connection (18) and seals off the same.

14. A roller according to claim 13, characterised in that a vacuum non-return valve (23) is disposed in the connecting duct (19) on the inside of the pressure relief valve (33).

15. A roller according to any one of claims 1 to 14, characterised in that the first cavity arrangement (H₁) comprises a single cavity (5) coaxial with the axis (2).

16. A roller according to any one of claims 1 to 15, characterised in that the heating device comprises a heat vehicle medium flowing lengthwise through the roller body (10).

17. A roller according to any one of claims 1 to 16, characterised in that the heating device comprises an electrical heating device.

18. A roller according to claim 17, characterised in that the heating device comprises electrical resistance heating rods (21).

19. A roller according to claim 18, characterised in that the heating device is an induction device.

20. A roller according to any one of claims 1 to 19, characterised in that the heating device (20) rotates with the roller body (10) and can be supplied with power via at least one rotary connection (14).

21. A roller according to any one of claims 1 to 19, characterised in that the heating device is arranged to be non-rotatable and is mounted for rotation in the hollow roller 5.

## Revendications

1. Rouleau chauffant (100) avec un corps de rouleau (10) cylindrique tournant autour de son axe (2), dont le périmètre extérieur (1) constitue la périphérie de travail du rouleau et qui comporte une première structure d'espace creux intérieur, avec un dispositif de chauffage s'étendant dans la première structure d'espace creux intérieur (H₁) sur la longueur du rouleau (100) dans son sens longitudinal au moins sur la largeur du rouleau (100), et avec une deuxième structure d'espace creux (H₂) fermée prévue dans le corps de rouleau (10) radialement en dehors de la première structure d'espace creux, sous forme de plusieurs canaux d'axes parallèles répartis régulièrement à la périphérie du corps de rouleau (10) allongés et fermés aux extrémités qui sont remplis partiellement d'un liquide pouvant se vaporiser à la température créée par le dispositif de chauffage,
caractérisé en ce que
les canaux allongés sont reliés ensemble au moins à une extrémité par une chambre annulaire (31), qui comprend un canal d'accès (16) pouvant être atteint de l'extérieur, obturable séparément.

2. Rouleau selon la revendication 1,
caractérisé en ce que
la chambre annulaire (31) recouvre radialement la section transversale des évidements en forme de barre.

3. Rouleau selon la revendication 1 ou 2,
caractérisé en ce que
la rainure annulaire (31) est préformée par un évidement annulaire (24 ; 37, 38) mis en place à l'extrémité du corps de rouleau cylindrique (10), évidement qui est en liaison pour le liquide avec les extrémités des canaux.

4. Rouleau selon la revendication 3,
caractérisé en ce que
la rainure annulaire (31) comporte une rainure périphérique interne (24), partant de la périphérie interne de l'extrémité du corps de rouleau (10), entamant les extrémités des canaux, qui est fermée par une bague de fermeture (27) recouvrant la section transversale libre de la rainure périphérique (24) radialement vers l'intérieur et les canaux passent à travers son flanc extérieur (33) et sont isolés vers l'extérieur axialement par un tampon (25) inséré à cet endroit.

5. Rouleau selon la revendication 3,
caractérisé en ce que
la rainure annulaire (31) comprend un gradin périphérique interne (37, 38) à l'extrémité du corps de rouleau (10), qui est fermé axialement vers l'extérieur et radialement vers l'intérieur par une bague de fermeture angulaire (40).

6. Rouleau selon les revendications 4 ou 5,
caractérisé en ce que
les bagues de fermeture (27, 40) et le tampon (25) sont soudés le long de leurs zones de jonction.

7. Rouleau selon une des revendications 3 à 6,
caractérisé en ce qu'
à chaque extrémité du corps de rouleau cylindrique (10) est appliqué un tourillon de rouleau (3), qui recouvre les zones de liaison (26, 28, 29, 43, 44).

8. Rouleau selon la revendication 7,
caractérisé en ce que
le tourillon de rouleau (3) comprend une face terminale (3') perpendiculaire à l'axe (2) venant en butée contre la face frontale (1') du corps de rouleau (10) et un épaulement de centrage (35) cylindrique en prise sur l'extrémité du corps de rouleau cylindrique (10).

9. Rouleau selon une des revendications 1 à 8,
caractérisé en ce que
le corps de rouleau (10) comprend aux extrémités des tourillons de rouleau (3) de même axe et le canal d'accès (16) s'étend à travers la paroi (17) d'un tourillon de rouleau (3) et débouche dans la zone de l'extrémité du tourillon de rouleau (3).

10. Rouleau selon la revendication 9,
caractérisé en ce que
le canal d'accès (16) débouche dans la face frontale (15) de la fusée d'essieu (3) et la face frontale (15) est recouverte par un disque terminal (7), au moyen duquel le canal d'accès (16) peut être fermé de manière solidaire en rotation.

11. Rouleau selon la revendication 10,
caractérisé en ce que
dans le disque terminal (7) est réalisé un raccordement (18) qui est en liaison par un canal de branchement (19) réalisé dans le disque terminal (7), avec le canal d'accès (17).

12. Rouleau selon une des revendications 1 à 11,
caractérisé en ce que
la chambre annulaire (31) est mise à l'abri de l'arrivée de trop hautes pressions.

13. Rouleau selon les revendications 11 et 12,
caractérisé en ce que
dans le raccordement (18) est introduit une sécurité contre une surpression (33) avec un disque de rupture.

14. Rouleau selon la revendication 13,
caractérisé en ce que
dans le canal de branchement (19) du côté intérieur de la soupape de surpression (33) est placée une soupape de retenue du vide (23).

15. Rouleau selon une des revendications 1 à 14,
caractérisé en ce que
la première structure d'espace creux (H₁) comporte un espace creux (5) coaxial séparé par rapport à l'axe (2).

16. Rouleau selon une des revendications 1 à 15,
caractérisé en ce que
l'appareillage de chauffage comprend un milieu caloporteur parcourant le corps de rouleau (10) selon la longueur.

17. Rouleau selon une des revendications 1 à 16,
caractérisé en ce que
l'appareillage de chauffage comprend un dispositif de chauffage électrique.

18. Rouleau selon la revendication 17,
caractérisé en ce que
l'appareillage de chauffage comprend des cartouches chauffantes électriques par effet Joule (21).

19. Rouleau selon la revendication 18,
caractérisé en ce que
l'appareillage de chauffage est un appareillage à induction.

20. Rouleau selon une des revendications 1 à 19,
caractérisé en ce que
l'appareillage de chauffage (20) tourne avec le corps de rouleau (10) et peut être alimenté en énergie par au moins un raccordement tournant (14).

21. Rouleau selon une des revendications 1 à 19,
caractérisé en ce que
l'appareillage de chauffage est disposé sans rotation possible et est monté en pouvant pivoter dans le rouleau creux (5).
